# DEMANDE DE BREVET EUROPEEN

(11) **EP 3 045 039 A1**
(43) Date de publication de la demande: **20.07.2016**
(21) Numéro de dépôt: 16151114.2
(22) Date de dépôt: 13.01.2016
(51) Int. Cl.: A01K 5/015

(54) **DISPOSITIF DE DISTRIBUTION DE NUTRIMENTS SOUS FORME DE BLOC A LECHER POUR LES ANIMAUX**

(30) Priorité: 15.01.2015 FR 1550307
(71) Demandeur: Creatio, 33230 Coutras (FR)
(72) Inventeur: BELLEC, Monique, 33230 Coutras (FR)
(74) Mandataire: Aquinov

(57) **Abrégé**

L'objet de l'invention est un dispositif de distribution de nutriments pour les animaux à partir d'un bloc solide à lécher, caractérisé en ce qu'il comprend un bloc (10) de nutriments disposé sur une palette (16), ledit bloc (10) comprenant un trou (12) central, vertical.

## Description

Le dispositif de distribution selon la présente invention concerne l'élevage et la mise à disposition de nutriments à partir d'un bloc solide à lécher pour les animaux.

On sait que les fourrages pour animaux d'élevage, peuvent être carencés en certains nutriments et nécessitent des compléments de nutriments par exemple du sel.

Lorsque les animaux sont en liberté, en pâture, ces compléments sont distribués sous forme de blocs de petit volume de l'ordre d'une vingtaine de kilos. De tels blocs sont généralement suspendus et les animaux viennent les lécher.

Ces blocs sont exposés aux intempéries mais comme la consommation d'une telle quantité est assez rapide, les intempéries ont un impact plus limité. Néanmoins, une certaine quantité de nutriments se délitent sous les effets de la pluie et du brouillard.

Ceci conduit à de la perte de matière mais surtout cette quantité de nutriments diffuse au même endroit, provoquant ainsi une accumulation locale dans le sol.

Enfin chaque bloc de nutriment actuel est trop léger pour utiliser un engin agricole mais suffisamment lourd pour contribuer à l'aggravation des troubles musculo squelettiques lorsque l'opérateur les manipule à la force des bras.

La contrepartie de tout ceci, c'est qu'il faut renouveler la mise à disposition de ces blocs régulièrement d'où une perte de temps, une augmentation des actions de mise en place, une augmentation des rotations et une surveillance accrue pour éviter tout manque.

En outre, les élevages ont tendance à croître en nombre, ce qui diminue la durée de mise à disposition pour les animaux du fait d'une consommation plus rapide de ces blocs de volume limité, l'éleveur devant réalimenter encore plus souvent sauf à multiplier le nombre de blocs. De plus, les blocs sont consommés sans pouvoir maîtriser la quantité de nutriments consommée et/ou sans pouvoir maîtriser la quantité à consommer par les animaux et encore moins la programmer.

La présente invention propose un dispositif qui pallie ces inconvénients et qui permet une manipulation humaine très limitée, qui propose une réserve de grand volume, qui évite les pertes et la diffusion liées aux conditions météorologiques, qui permet d'ajuster la consommation distribuée et/ou de déterminer la quantité consommée.

Le dispositif selon la présente invention est maintenant décrit en détail suivant un mode de réalisation particulier, non limitatif. La description de ce dispositif est réalisée en regard des dessins annexés, dessins sur lesquels les différentes figures représentent :
- Figure 1 : une vue en perspective du dispositif selon la présente invention,
- Figure 2 : une vue en coupe médiane dudit dispositif,

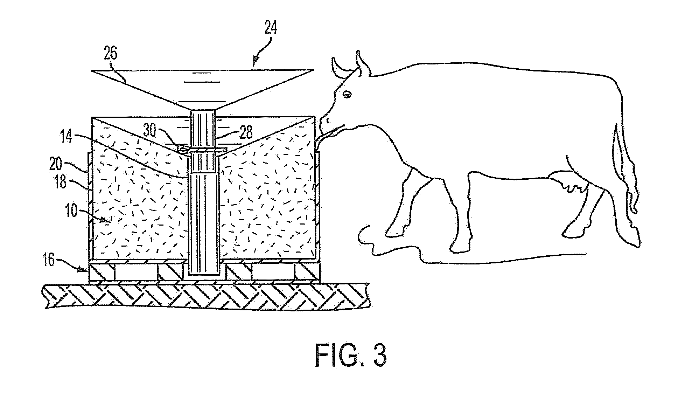

- Figure 3 : une vue en coupe du dispositif dans sa configuration protégée,
- Figures 4A à 4D : des vues d'un synoptique du comportement du dispositif au fur et à mesure de la consommation animale.

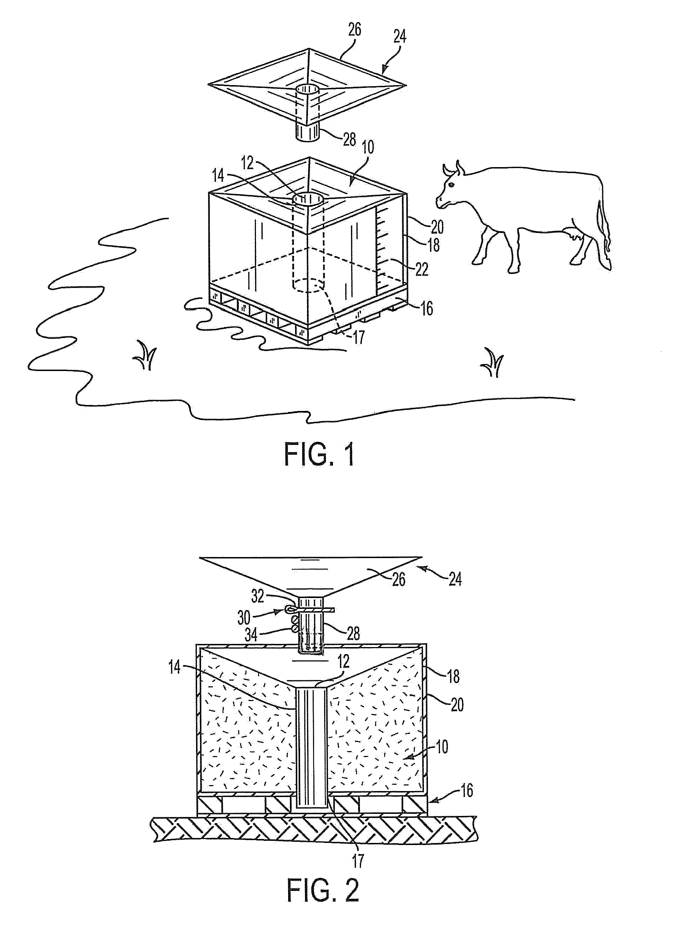

Sur la figure 1, on a représenté le dispositif selon la présente invention, qui comprend un bloc 10 de nutriments à lécher pouvant présenter un volume important de l'ordre du m³, c'est-à-dire un poids supérieur à 1 tonne.

Ce bloc sur la figure 1 est tel qu'il se présente en sortie de fabrication jusqu'à sa mise à disposition.

La composition du bloc est à base de sel et peut comprendre de nombreux nutriments tels que des oligoéléments, de l'azote, des céréales, mélasses, vinasses, coproduits des industries alimentaires, des plantes aromatiques et médicinales, des enzymes, des probiotiques, prébiotiques, des algues, des vitamines, des acides aminés, des matières grasses, des fibres pour donner quelques exemples.

Dans certaines applications, les blocs peuvent ne pas comprendre de sel mais uniquement des poudres des autres composés.

La forme du bloc 10 est de préférence parallélépipédique dont la base est aux dimensions d'une palette standard.

Le bloc 10 comprend en son centre un trou 12 central, vertical, ménagé à la fabrication, par exemple en introduisant un tube, du type perdu ou un tube de moulage amovible, solidaire du moule permettant l'obtention du bloc.

En l'occurrence, dans le mode de réalisation retenu, le trou 12 comporte un tube 14 perdu en matériau cellulosique du type en carton triple cannelure, donc de forte densité.

Le bloc 10 en forme de parallélépipède présente donc un trou 12, vertical en son centre avec un tube 14.

Le bloc 10 repose sur une palette 16 afin de permettre notamment la préhension de l'ensemble au moyen d'une fourche d'un engin agricole, non représenté, ceci de façon connue. La palette 16 présente avantageusement un trou 17 central, dans lequel débouche le tube 14. Des moyens de fixation du tube sur la palette peuvent être prévus, comme un élastique de façon à maintenir en rappel ledit tube.

On entend par palette pour la suite de la description, tout support apte à former un socle, de préférence en surélévation.

Le bloc 10 est coulé lors de la fabrication dans un moule 18 perdu, extérieur, lui-même en matériau cellulosique du type carton triple cannelure, de forte densité, entouré périphériquement d'un film 20 d'étanchéité. Un gabarit extérieur peut être rendu nécessaire pour reprendre les efforts de pression radiale, surtout si le bloc est obtenu selon une variante à savoir par compression. Les procédés de fabrication du bloc en eux-mêmes ne sont pas l'objet de la présente invention. Le bloc peut aussi être réalisé à partir de blocs de plus petites dimensions et empilés dans le carton triple cannelure.

Le film 20 d'étanchéité peut être consommable par les animaux, s'il venait à être ingéré.

Le moule 18 en carton est aux dimensions de la palette 16 qui supporte l'ensemble. Il est aussi avantageusement prédécoupé sur toute sa périphérie, régulièrement sur la hauteur de façon à pouvoir dégager ledit moule par tranche.

Des intercalaires, non représentés pour la clarté des dessins, peuvent être disposés régulièrement sur la hauteur, sur toute la section afin de séparer lesdites tranches. Ces intercalaires assurent un repère mais aussi limitent la consommation lorsque les animaux arrivent au niveau de ladite intercalaire.

Préalablement au filmage, par exemple avec du film rétractable, on introduit entre le carton et ledit film au moins une jauge 22 graduée par exemple en poids de nutriment par unité de hauteur. De telles jauges 22 doivent être solidarisées sur la moule 18 perdu, voire venues de fabrication avec ledit moule. Ces jauges 22 peuvent être directement imprimées, par tout moyen.

Avantageusement, deux jauges peuvent être placées tête bêche de façon à pouvoir lire rapidement la quantité de nutriments restante et la quantité de nutriments consommée et ce, sur chacune des faces.

Comme on peut le constater sur la figure 2 qui représente une vue en coupe, les nutriments sont contenus dans le moule 18 perdu, en carton, ils sont protégés en périphérie et sur le dessus par le film 20 d'étanchéité et disposés au-dessus du sol, donc au-dessus de toute accumulation d'eau susceptible de se produire sur le sol, sous le bloc, grâce à la palette. Avantageusement la palette est posé sur un sol légèrement inclinée de façon à éviter l'accumulation localement. La palette peut être déplacée rapidement en fonction des beoins. De façon avantageuse, la forme du bloc 10 est particulière en ce sens qu'elle comporte en son centre une dépression de type conique afin de converger vers le trou 12 et le tube 14.

Dans ce cas, les intercalaires peuvent être également de la même forme de façon à réaliser des tranches de cône à pans.

Sur les figures 1 et 2, il est également représenté des moyens 24 de protection du bloc contre les intempéries.

Ces moyens 24 de protection comprennent avantageusement un toit 26 avec un mât 28 apte à se loger dans le trou 12 et plus particulièrement dans le mode de réalisation selon l'invention, dans le tube 14 ainsi que des moyens 30 de réglage de la profondeur d'insertion dans ledit trou.

Ce mât 28 est avantageusement creux donc sous forme d'un cylindre et débouchant. Sa hauteur est limitée de façon à pénétrer dans le trou 12 et/ou le tube 14 mais sans excès, de façon à ne venir en butée sur la palette que vers la fin de la consommation du bloc.

Le diamètre extérieur de ce mât est inférieur à celui du trou 12 de façon à laisser subsister un jeu suffisant tout en maintenant les deux axes, celui du trou 12 et celui du mât, sensiblement coaxiaux.

Le toit 26 présente une surface sensiblement égale à celle du dessus du bloc 10.

Ce toit 26 est de forme incurvée, de profil homothétique de celui du dessus du bloc, c'est-à-dire de forme conique afin de converger vers l'extrémité supérieure du mât 28. Cette forme incurvée est maintenue même si le bloc 10 est tout simplement de forme parallélépipédique, avec des tranches de parallélépipède.

Les moyens 30 de réglage de la hauteur des moyens 24 de protection comprennent une goupille 32 transversale, apte à se loger dans des trous 34, ménagés dans le mât 28. La goupille a une longueur supérieure au diamètre du trou 12 ou du tube 14.

Les trous 34 sont ménagés de façon radiale, par paires, avec un alignement des trous d'une même paire suivant un diamètre.

Cet agencement permet un réglage en hauteur de la goupille, donc un réglage en hauteur des moyens 24 de protection par rapport à la face supérieure du bloc.

Des moyens élastiques de rappel peuvent être interposés dans le trou 12 et le tube 14 afin de maintenir les moyens 24 de protection en place ou de les ramener en place après un déplacement lié au vent mais aussi aux animaux.

La mise en oeuvre du dispositif de distribution de nutriments selon la présente invention est indiquée ci-après.

Le dispositif de distribution est transféré sur le lieu de consommation au moyen d'un engin agricole muni d'une fourche, disponible sur toutes les exploitations aptes à utiliser le dispositif selon la présente invention.

Une fois en place, le bloc 10 de nutriments se trouve sur la palette et reste hors de contact avec le sol. L'opérateur coupe le film 20 d'étanchéité en partie supérieure.

De plus, une découpe est réalisée sur la périphérie haute, pour retirer la portion de film 20 d'étanchéité et une bande du moule 18, permettant ainsi l'accès au bloc par la périphérie. Ceci s'il a été décidé de mette à disposition une tranche unique mais il est possible, lorsque la consommation est importante, de prévoir une découpe pour mise à disposition de plusieurs tranches simultanément.

Les moyens 24 de protection sont mis en place à la fabrication et se trouvent,sous le film par exemple, pour que l'utilisateur puisse y accéder dès l'ouverture sur le dessus. Les moyens peuvent être emballés séparément.

Ces moyens 24 de protection sont mis en place, c'est-à-dire que l'opérateur soulève le toit 26 en faisant coulisser le mât 28 dans le tube 14 du trou 12.

Il met alors en place la goupille 32 transversale à travers les trous 34 d'une même paire de trous en vis à vis, à la hauteur choisie, en fonction des races animales et/ou de l'âge des animaux d'une une même race. Il faut en effet, que l'animal puisse passer la tête et puisse consommer les nutriments jusqu'au centre et jusqu'à l'intercalaire lorsqu'il y en a un. Lorsque l'opérateur relâche le mât 28, celui-ci coulisse dans le tube 14 et la goupille 32 prend appui sur ledit tube 14 et/ou sur les bords du trou 12 ménagé dans le bloc.

Les animaux peuvent donc consommer les nutriments sur la hauteur libérée et sur la surface du bloc.

La jauge 22 facilite le choix de la hauteur de découpe en fonction des besoins.

Sachant la consommation, ou en fonction des surveillances, l'opérateur revient sur place et si les nutriments ont été consommés de façon adaptée, il découpe une hauteur supplémentaire de carton et de film d'étanchéité.

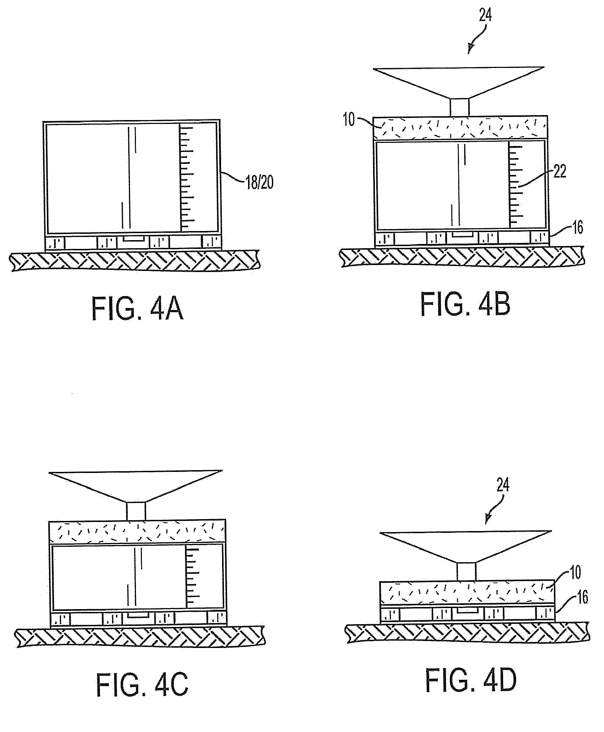

L'opérateur peut bien sûr ajuster la hauteur supplémentaire en fonction des besoins liés à la saison, aux races ou à l'âge des animaux concernés. Voir synoptique des figures 4A à 4D. Dans l'intervalle, si des intempéries et surtout si de la pluie est tombée, celle-ci a été en très grande partie collectée par le toit 26 et évacuée dans le tube 14 et le trou 12 vers le dessous de la palette.

Si de l'eau de pluie ruisselle sur la face supérieure, elle s'écoule dans ledit tube 14 et le trou 12 lorsque la surface est en forme de cône. Dans tous les cas, après ou en cours de consommation, la surface prend une forme aléatoire et une partie au moins de l'eau arrivant sur la surface du bloc est évacuée par le centre.

Lorsque l'opérateur revient libérer un nouveau volume de sel, il ajuste également les mouvements en translation du mât 28 en découpant une partie du tube 14 si celui-ci n'est pas délité pour la partie émergente.

Le toit 26 s'ajuste donc en hauteur en fonction du niveau de la surface supérieure du bloc, laissant toujours un espace de consommation, espace qui peut augmenter au fur et à mesure de la consommation des différentes tranches.

En partie inférieure du bloc 10, le film d'étanchéité assure la protection du bloc, contre la pluie d'une part et contre les projections de terre, de boue et de déjections.

Il est aussi possible de prévoir une rehausse de la palette à mi consommation par exemple pour le confort des animaux. La rehausse peut être constituée de palettes usagées elles-mêmes.

Dans le cas des ovins, la quantité consommée est moindre mais surtout les animaux n'ont pas la même hauteur sur pattes donc le bloc 10 aura avantageusement une hauteur réduite, adaptée.

La forme générale du bloc peut être ajustée en fonction des besoins, notamment la forme peut aussi être cylindrique avec un axe vertical, de façon analogue à celle des balles de foin ou d'ensilage.

Les moyens 24 de protection sont avantageusement en matière plastique recyclable mais peuvent aussi être en métal et réutilisable avec des modules séparables.

Il suffit alors de récupérer lesdits moyens de protection d'un bloc consommé et de les replacer sur un nouveau bloc à lécher.

De même le montage à goupille peut aussi être réalisé avec un pas de vis à filet grossier de façon à se visser dans le bloc de nutriments et/ou dans le tube 14.

L'avantage est le réglage par rotation d'une part et la lutte contre l'arrachement en cas de coup de vent d'autre part.

En ce qui concerne le bloc selon l'invention, il peut aussi être utilisé en intérieur durant les périodes hivernales par exemple, dans ce cas les toit 26 ne présente plus d'intérêt mais tous les autres éléments tels que les moyens de protection contre les déjections, les moyens de contrôle de la consommation ou de la quantité consommée, la praticité, la longue durée d'usage, la manipulation avec un engin agricole, le stockage aisé sont conservés.

## Revendications

1. Dispositif de distribution de nutriments pour les animaux à partir d'un bloc solide à lécher, **caractérisé en ce qu'**il comprend un bloc (10) de nutriments, disposé sur une palette (16), ledit bloc (10) comprenant un trou (12) central, vertical et des moyens (24) de protection contre les intempéries associés à ce trou vertical.

2. Dispositif de distribution de nutriments pour les animaux à partir d'un bloc solide à lécher, selon la revendication 1, **caractérisé en ce qu'**il comprend un moule (18) extérieur.

3. Dispositif de distribution de nutriments pour les animaux à partir d'un bloc solide à lécher, selon la revendication 1 ou 2, **caractérisé en ce qu'**il comprend au moins un film (20) de protection.

4. Dispositif de distribution de nutriments pour les animaux à partir d'un bloc solide à lécher, selon l'une quelconque des revendications précédentes, **caractérisé en ce qu'**il comprend un tube (14) perdu disposé dans le trou (12) central, vertical.

5. Dispositif de distribution de nutriments pour les animaux à partir d'un bloc solide à lécher, selon la revendication 3 ou 4, **caractérisé en ce que** le moule (18) et/ou le tube (14) sont en matériau cellulosique.

6. Dispositif de distribution de nutriments pour les animaux à partir d'un bloc solide à lécher, selon la revendication 5, **caractérisé en ce que** les moyens (24) de protection comprennent un toit (26) avec un mât (28) apte à se loger dans le trou (12) ainsi que des moyens (30) de réglage de la profondeur d'insertion dudit mât (28) dans ledit trou (12).

7. Dispositif de distribution de nutriments pour les animaux à partir d'un bloc solide à lécher, selon la revendication 6, **caractérisé en ce que** le toit (26) présente une surface sensiblement égale à celle du dessus du bloc (10), de forme incurvée.

8. Dispositif de distribution de nutriments pour les animaux à partir d'un bloc solide à lécher, selon l'une quelconque des revendications précédentes, **caractérisé en ce qu'**il comprend au moins une jauge (22).

9. Dispositif de distribution de nutriments pour les animaux à partir d'un bloc solide à lécher, selon l'une quelconque des revendications précédentes, **caractérisé en ce que** la surface supérieure du bloc (10) est en forme de cône.

10. Dispositif de distribution de nutriments pour les animaux à partir d'un bloc solide à lécher, selon l'une quelconque des revendications précédentes, **caractérisé en ce qu'**il comprend des intercalaires disposés régulièrement sur la hauteur, sur toute la section dudit bloc (10) afin de séparer des tranches.
